# EUROPEAN PATENT SPECIFICATION

(11) **EP 2 893 815 B1**
(45) Date of publication and mention of the grant of the patent: **01.03.2017**
(21) Application number: 15150565.8
(22) Date of filing: 09.01.2015
(51) Int. Cl.: A23K 10/00, A23K 50/00, A23K 40/30, A23K 10/18, A23K 50/10

(54) **Assorted livestock feed with enhanced nutrients and method of preparing the same**
Tierfutter mit verbesserten Nährstoffen und Verfahren zur Herstellung derselben
Assortiment de l'alimentation du bétail avec des nutriments améliorées et procédé de préparation du même

(30) Priority: 09.01.2014 KR 20140002736
(43) Date of publication of application: 15.07.2015
(73) Proprietor: CJ Cheiljedang Corporation, Jung-gu Seoul (KR)
(72) Inventor: Choi, Byoung Yang, 404-170 Incheon (KR); Lee, Seung Heon, 403-858 Incheon (KR); Choi, Jang Geun, 400-103 Incheon (KR); Kang, Hee Kyung, 405-865 Incheon (KR); Chang, Ju Song, 139-861 Seoul (KR); Chee, Seok Woo, 135-795 Seoul (KR)
(74) Representative: Price, Phillip

(56) References cited:
- GB-A- 1 091 264
- DATABASE FSTA [Online] INTERNATIONAL FOOD INFORMATION SERVICE (IFIS), FRANkFURT-MAIN, DE; 1 January 2006 (2006-01-01), Borer U P: "Method for preparing a concentrate, containing vitamins, minerals and trace elements, suitable for humans and animals, the product thereof and its use.", XP002736256, Database accession no. FS-2006-11-Gv1249 & FSTA (EUROPEAN PATENT APPLICATION), 1 January 2006 (2006-01-01), EUROPEAN PATENT APPLICATION 2006 ROM, 9490 VADUZ, LIECHTENSTEIN
- DATABASE FSTA [Online] INTERNATIONAL FOOD INFORMATION SERVICE (IFIS), FRANkFURT-MAIN, DE; 1 January 1976 (1976-01-01), GHEORGHIU A ET AL: "Utilization of the liquid feed-yeast as a stimulating addition in the basic ration of cows during summer time. (translated)", XP002736257, Database accession no. FS-1979-03-P-0344 & LUCRARILE STIINTIFICE ALE INSTITUTULUI DE CERCETARI PENTRU NUTRITIA ANIMALELOR, vol. 6, 1 January 1976 (1976-01-01), page 15, LUCRARILE STIINTIFICE ALE INSTITUTULUI DE CERCETARI PENTRU NUTRITIA ANIMALELOR 1976

## Description

### CROSS-REFERENCES TO RELATED APPLICATION

This patent application claims the benefit of priority from Korean Patent Application No. 10-2014-0002736, filed on January 09, 2014.

### Technical Field

The present invention relates to a method for preparing an assorted livestock feed with enhanced nutrients using yeast culture as a feed additive.

### Background Art

Yeast is a unicellular microorganism having a eukaryotic structure and is generic term for fungi proliferating by budding. In general, yeast is abundant in cellular nutrients such as essential amino acids, vitamin B complex, minerals, etc. Digestive enzymes and metabolites released during a growth and proliferation process, and autolysis of yeast serve an action of improving productivity and digestibility of animals, and the minerals formed during the metabolic process of yeast have high bioavailability as chelated minerals.

Accordingly, yeast, as a cheap fat and protein source, is also used as a feed additive for ruminants. The yeast used as a feed additive for ruminants is a supplement for unknown growth factors, and improves the feed preference by a flavoring material such as glutamic acid. As the cell walls of yeast consists of high unit compounds such as mannan and glucan and thereby have high affinity for oxygen, yeast have been known to promote decomposition activity and growth of rumen microbes such as cellulolytic bacteria through the improvement of fermentation environment such as removal of residual oxygen and pH increase in ruminant stomach. Additionally, to keep healthy and for efficient production of animals, beneficial microbes should be continuously proliferated. Yeast promotes the growth of lactic acid bacteria in animal's intestines while reducing the number of pathogenic bacteria to thereby improve the intestinal environment and maintain an optimum state for digestion and absorption of nutrients (Cartwright *et al.,* 1986; Rose, 1980; Shin *et al.,* 1990).

In particular, the effects of addition of live yeast can be easily found in many references. More specifically, Association of American Feed Control Officials (AAFCO) defined live yeast culture in 1989 as "a product prepared by drying yeast and media in which the yeast is cultured in a manner as to preserve the fermenting activity of the yeast, and the components of the media should be specified". Active ingredients may be classified into live yeast cells, components of media, and metabolic products. Live yeast cells secrete various digestive enzymes into media, thereby decomposing media components into absorbable low molecule materials (e.g., monosaccharides, amino acids, fatty acid), absorbing the materials for cell proliferation, and releasing metabolic products such as various enzymes, vitamins, amino acids, unknown growth factors, organic acids, yeast flavors, etc.

If an excess assorted feeds are supplied with high producing cows and beef cattle for supplement of nutrients, the pH within the rumen becomes lowered and thereby the microbial colonies are destroyed and rumen acidosis is resulted. The rumen acidosis damages gastric mucosal membrane of livestock and causes liver abscess, so that various metabolic diseases simultaneously occur. Therefore, productivity of the livestock is greatly deteriorated. Accordingly, a feed additive to help rumen fermentation becomes necessary when assorted feed is supplied excessively. Yeast culture contains lactic dehydrogenase capable of utilizing D-lactic acid, and has a cell wall capable of a buffer action, and thus yeast culture has a special effect to prevent pH decrease (Jarrett, 1985).

Yeast is mostly mixed for use as a feed additive at the time of mixing a total mixed ration in a livestock farm. In general, yeast used as a feed additive is killed during the manufacture of livestock feeds due to high temperature and high pressure molding.

To solve the above problem, there have been developed methods to modify liquid yeast into a solid state using an excipient, or to coat yeast in a solid state so that it can tolerate high temperature and high pressure conditions.

Korean Registered Patent Publication No. 10-0410830 relates to a method for preparing a microbial agent as a feed additive including: culturing lactic acid bacteria, yeasts, and *Bacillus subtilis,* respectively; adsorbing and immobilizing to a mixture of zeolite and defatted rice bran and culturing it; drying the resultant; and respectively mixing the resultant and then pulverizing.

Korean Registered Patent Publication No. 10-1115306 relates to a method for preparing highly concentrated solid-state fermentation probiotics for rumen livestock including preparing highly concentrated liquid probiotics seed culture in a liquid medium including jujube as an active ingredient, followed by re-fermentation of the starter culture in a solid medium.

Korean Registered Patent Publication No. 10-1252132 relates to a method for preparing a feed for lactating dairy cattle including: inoculating a strain of *Bacillus sp.,* lactic acid bacteria, and yeast in a mixed medium obtained by mixing liquid chlorella and a solid medium and then mixing and culturing; drying the resulting culture; and mixing the thus obtained feed additive with a feed for livestock.

GB 1,091,264 discloses a method of producing a protein-forming feed from sugar beet cossettes and an aqueous solution comprising urea, a phosphate, and molasses for ruminants.

International Food Information Service database accession no. FS-2006-11-Gv1249 discloses a process for manufacture of a concentrate containing vitamins, minerals and trace elements, for use in foods and feeds; the concentrates may be in flake or powder form. The process is based on: mixing food or feed by-products with pH <4.0 with by-products of the food or feed industries with pH approx. 5.0-6.0; addition of natural minerals with pH >8.5; addition of live liquid yeast and vegetable oils; drying the resulting paste; addition of encapsulated vitamin/trace element mix; and binding the resulting mix with a solution containing natural flavourings, living bacteria and enzymes. The resulting concentrates may be used in foods, food supplements and feeds.

International Food Information Service database accession no. FS-1979-03-P-0344 discloses utilization of the liquid feed-yeast as an addition to the basic ration of cows during summer time.

However, notwithstanding with the above efforts, upon performing an additional experiment, it has found that most yeast were killed in the final assorted feed due to the high temperature and high pressure process for preparing feeds by measuring the number of yeast after preparing assorted feed including a feed additive containing yeasts.

### Disclosure

### Technical Problem

As a result of endeavoring to solve the above problems, the present inventors complete the present invention by finding that a much higher number of live yeast can remain in the final product of assorted feed by adding a liquid yeast culture in a spraying manner using a liquid spray device, after passing through a preparing process of a feed having a high-temperature and high-pressure process.

It is an object of the present invention to provide a method for preparing an assorted livestock feed using a liquid yeast culture as a feed additive in order to enhance nutrients of assorted livestock feed.

Also disclosed is
an assorted livestock feed with enhanced nutrients prepared by using the above method.

### Technical Solution

In order to accomplish the above objects, the present invention provides a method for preparing assorted livestock feed with enhanced nutrients comprising:
(a) preparing a liquid yeast culture by inoculating yeast cells into liquid medium and culturing them;
(b) selecting raw materials for the assorted feed and mixing;
(c) forming the mixed raw materials into pellets via a pellet forming device;
(d) cooling the formed pellets;
(e) spraying the liquid yeast culture obtained in step (a) to the external surface of the cooled pellets; and
(f) cooling the pellets on which the liquid yeast culture has been sprayed.

Alternatively viewed, the present invention provides a method for preparing assorted livestock feed, the method comprising:
(a) preparing a liquid yeast culture by inoculating yeast cells into liquid medium and culturing them;
(b) selecting raw materials for assorted feed and mixing;
(c) forming the mixed raw materials into pellets via a pellet forming device;
(d) cooling the formed pellets;
(e) spraying the liquid yeast culture obtained in step (a) to the external surface of the cooled pellets;
   and
(f) cooling the pellets on which the liquid yeast culture has been sprayed.

Also disclosed is an assorted livestock feed with enhanced nutrients prepared according to the above method. Alternatively viewed, also disclosed is an assorted livestock feed prepared according to the above method.

### ADVANTAGEOUS EFFECT

According to the preparation method of the present invention, a much higher number of yeast can survive in an assorted feed, and thus the present invention can provide an assorted livestock feed with enhanced nutrients.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a diagram illustrating a spray facility for spraying a liquid microbial agent;
FIG. 2 is a graph showing a change in pH depending on incubation time in an artificial rumen experiment;
FIG. 3 is a graph showing the change in organic material digestibility depending on incubation time in an artificial rumen experiment;
FIG. 4 is a graph showing the change in a volatile fatty acid depending on incubation time in an artificial rumen in an artificial rumen experiment; and
FIG. 5 is a graph showing the result of feed experiment of supplying assorted feed containing a liquid yeast culture (change in the milk yield).

### DESCRIPTION OF THE PREFERRED EMBODIMENTS

Features and advantages of the present invention will be more clearly understood by the following detailed description of the present preferred embodiments by reference to the accompanying drawings. It is first noted that terms or words used herein should be construed as meanings or concepts corresponding with the technical sprit of the present invention, based on the principle that the inventor can appropriately define the concepts of the terms to best describe his own invention. Also, it should be understood that detailed descriptions of well-known functions and structures related to the present invention will be omitted so as not to unnecessarily obscure the important point of the present invention.

Hereinafter, the present invention will be described in more detail.

In an aspect, the present invention provides a method for preparing an assorted livestock feed with enhanced nutrients comprising:
(a) preparing a liquid yeast culture by inoculating yeast cells into liquid medium and culturing them;
(b) selecting raw materials for the assorted feed and mixing;
(c) forming the mixed raw materials into pellets via a pellet forming device by adding heat and pressure;
(d) cooling the formed pellets;
(e) spraying the liquid yeast culture obtained in step (a) to the external surface of the cooled pellets; and
(f) cooling the pellets on which the liquid yeast culture has been sprayed.

Alternatively viewed, the present invention provides a method for preparing assorted livestock feed, the method comprising:
(a) preparing a liquid yeast culture by inoculating yeast cells into liquid medium and culturing them;
(b) selecting raw materials for assorted feed and mixing;
(c) forming the mixed raw materials into pellets via a pellet forming device;
(d) cooling the formed pellets;
(e) spraying the liquid yeast culture obtained in step (a) to the external surface of the cooled pellets;
   and
(f) cooling the pellets on which the liquid yeast culture has been sprayed.

The liquid medium can be any medium which can be used for culturing yeast without limitation, preferably a medium including 3-13 wt% of molasses, 1-5 wt% of glucose and 0.1-0.2 wt% of NaCl, but is not limited thereto. The contents of components in the medium may be appropriately adjusted by one of ordinary skill in the art. Additionally, a medium, which is sterilized at a high temperature, may be preferred to prevent proliferation of unwanted microorganisms.

The amount of yeast inoculated in the medium may be 1-5 wt% to the entire medium but is not particularly limited thereto. The yeast to be used may be any known yeast, preferably *Saccharomyces cerevisiae,* but is not limited thereto.

Generally, the yeast which can be used as a feed additive is aerobic and facultative anaerobic yeast and may be grown both in aerobic and anaerobic conditions. Generally, the yeast is well grown in a weak acidic pH of 4.0-6.5, and an optimum temperature of growth is 25°C-35°C. In an embodiment, step (a) may be performed preferably by: inoculating the yeast; stirring at 35°C for 15 minutes; and culturing at 37°C for 3 days.

Preferably, the liquid yeast culture obtained in step (a) contains 5 x 10⁷ - 1 x 10⁹ cfu/g of yeast.

In step (b), the raw materials for the assorted feed may be the conventional feed used for livestock, for example, the conventional raw materials for the preparation of early and mid-lactation feeds.

In step (c), the pellets for assorted feed may be preferably produced using a double pellet forming device or a single pellet forming device, and more preferably using a double pellet forming device because it increases the hardness of the pellets to make them agglutinate hard thereby increasing the rumen passage rate.

In step (d), the formed pellets may be preferably cooled to the room temperature to remove water.

In step (e), the liquid yeast culture prepared in step (a) may be preferably sprayed using a liquid spray device.

In step (e), the liquid yeast culture prepared in step (a) may be preferably added to become 0.05 - 0.5% of the total assorted feed.

In step (f), the pellets on which the liquid yeast culture is sprayed are preferably cooled to the room temperature by using air of 18 - 25°C by a cooling device to remove water.

Also disclosed is an assorted livestock feed with enhanced nutrients manufactured according to the method of the present invention. Alternatively viewed, also disclosed is an assorted livestock feed manufactured according to the method of the present invention.

Cellulolytic bacteria in the rumen utilize fatty acid generated by decomposition of fat by yeast present in the yeast culture as a nutrient source, and thus the supply of yeast culture increases the number of cellulolytic bacteria in the rumen thereby increasing the production of the total volatile fatty acid in the rumen. When an excess assorted feed are supplied with milking cows, the amount of propionic acid production increases while the amount of acetic acid production decreases. The supply of a yeast culture in a condition with high dependency on an assorted feed increases the produced amount of acetic acid, which is a precursor of milk fat, thereby increasing milk fat.

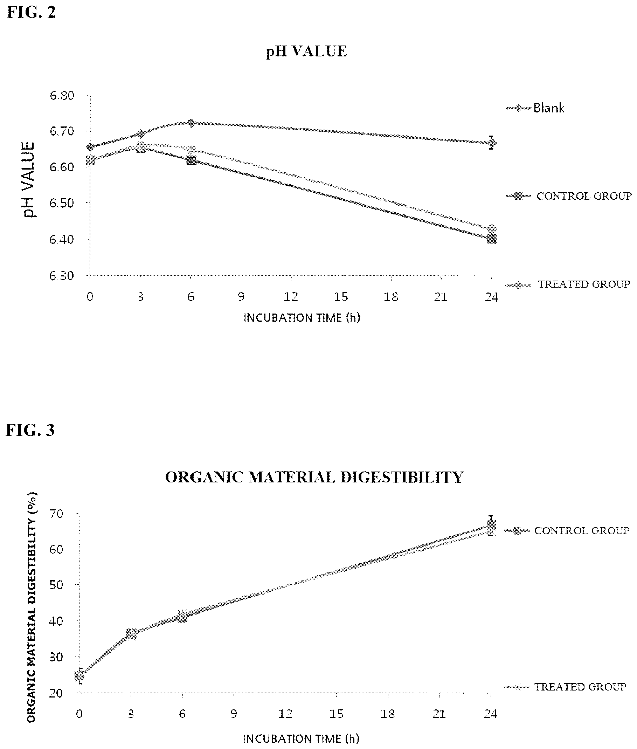

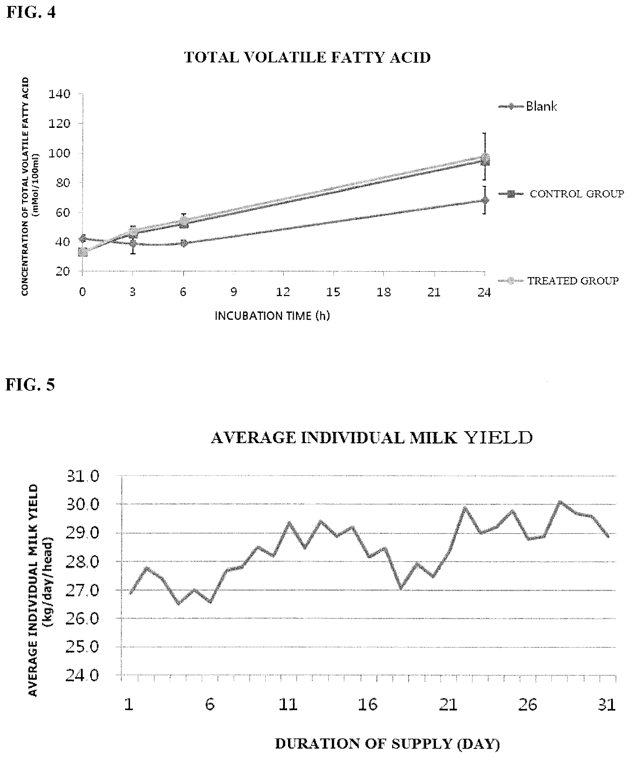

It can be found that the assorted livestock feed prepared according to the present invention increases the organic matter digestibility and the amount of volatile fatty acid production in the rumen (FIGS. 2 to 4), and also that amount of milk produced was increased due to the increase in growth of cellulolytic bacteria (Table 7 and FIG. 5).

Hereinafter, the present invention will be described in more detail with reference to the following examples and experimental examples. However, the following examples and experimental examples are provided for illustrative purposes only, and the scope of the present invention should not be limited thereto in any manner.

### [Example]

### Example 1: Preparation of a liquid yeast culture (based on 500 mL of liquid medium)

To an Erlenmeyer flask was added 25 mL of molasses, 10g of glucose and 0.5g of NaCl, and then added with distilled water to a final volume of 500 mL. The flask with the mixture was sterilized in a sterilizer at 121°C for 20 minutes. Upon completion of sterilization, the flask was cooled to 35°C, added with 5 g of yeast while maintaining the temperature at 35°C. The resultant was stirred in a stirrer for 15 minutes, and cultured at 37°C for 3 days.

Upon completion of the culture, the yeast culture solution was examined under microscope, and as a result, 5 x 10⁸ cfu/g of yeast culture was prepared.

### Example 2: Evaluation of optimum culture medium condition for preparation of a liquid yeast culture

In order to examine the culture medium condition enabling the highest amount of yeast to be cultured, the content of each of the medium components was changed as shown in Table 1 below, and cultured. Then, the number of yeast in the yeast culture liquid was measured.

**[Table 1] Medium Components**

| Medium Components | No. 1 | No. 2 | No. 3 | No. 4 | No. 5 |
|---|---|---|---|---|---|
| | % | | | | |
| Glucose | 2 | 4 | 4 | 2 | 2 |
| Molasses | 5 | 10 | 5 | 10 | 5 |
| Yeast | 1 | 2 | 1 | 1 | 2 |
| NaCl | 0.1 | | | | |

The content of medium components was changed as shown in Table 1 above, and the result of the yeast culture is shown in Table 2 below.

**[Table 2] Number of yeast in yeast culture according to change in the content of medium components**

| Category | No. 1 | No. 2 | No. 3 | No. 4 | No. 5 |
|---|---|---|---|---|---|
| Number of yeasts (cfu/g) | 5.0 x 10⁸ | 4.0 x 10⁸ | 3.8 x 10⁸ | 1.4 x 10⁸ | 1.0 x 10⁸ |

### Example 3: Preparation of an assorted livestock feed prepared using a liquid yeast culture

Raw materials suitable for nutrients were selected and weighed according to their respective weight %.

Raw materials consisting of 32 % of corn, 15% of wheat bran, 10% of soybean meal, 10% of corn gluten feed, 7% of distiller's dried grains with solubles (DDGS), 7% of rapeseed meal, 6% of palm kernel meal, 6% of copra meal, 5% of rice bran, 1.55% of limestone, 0.25% of salt, 0.2% of a mix of vitamins and minerals were mixed well for 5 minutes to prepared an assorted feed containing 11.22% of water, 18.14% of crude protein, 4.53% of crude fat, 6.24% of crude cellulose, 6.01%of crude ash, 11.23% of acid detergent fiber (ADF), and 23.54% of neutral detergent fiber (NDF).

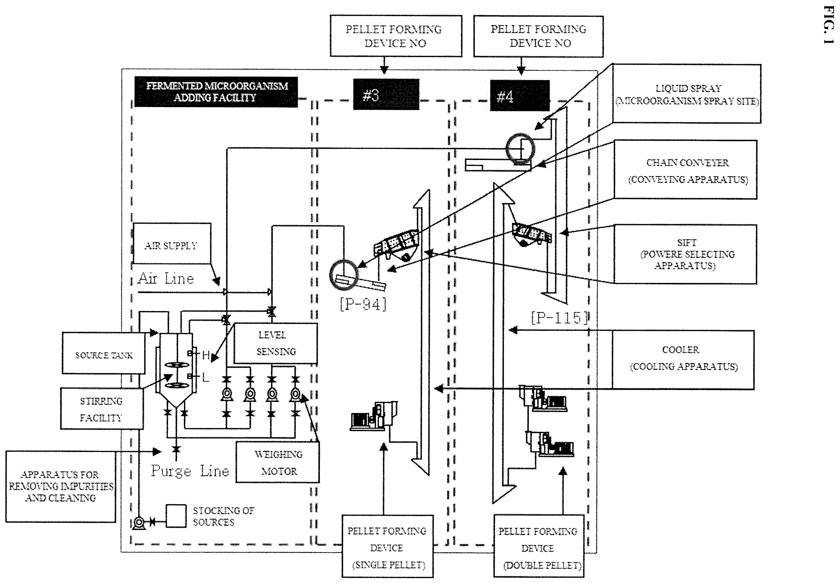

The above mixed raw materials were heated at 80°C, while being pressed under a pressure of 1.5 BPS, and formed into pellets via a pellet forming device. The formed pellets were cooled to room temperature to remove water, and the liquid yeast culture prepared in Example 1 was sprayed on the surface of the cooled pellets using a liquid spray device (FIG. 1). The assorted feed where the liquid yeast culture was sprayed thereon was cooled to remove water therefrom.

The number of yeast present in the liquid yeast culture prepared in Example 1 was 5 x 10⁸ cfu/g. When an assorted feed was prepared using 0.5% of the liquid yeast culture, the number of yeast present in the assorted feed was 1 x 10⁶ cfu/g.

**[Table 3] Viability of yeast present in the assorted feed over time**

| Time | 0h | 12h | 24h | 48h | 72h | 96h | 120h | 168h | 360h |
|---|---|---|---|---|---|---|---|---|---|
| Number of yeast in a feed mixed with liquid yeast (cfu/g) | 1 × 10⁶ | 1 × 10⁶ | 8 × 10⁵ | 8 × 10⁵ | 8 × 10⁵ | 6 × 10⁵ | 3 × 10⁵ | 1 × 10⁵ | 1 × 10⁵ |
| Number of yeast in a feed mixed with solid yeast (cfu/g) | killed | | | | | | | | |

As shown in Table 3 above, it can be found that the yeast present in the assorted feed prepared according to the method of Example 3 can has cellulolytic bacteria activity and increases milk fat in the rumen after supply as compared to the yeast present in the conventional assorted feed produced by mixing solid yeast in the assorted feed, and also that regard of the low heat resistance of yeast, the method of Example 3 enables longer duration of life and higher viability.

### Example 5: Investigation of viability of yeast present in an assorted livestock feed prepared using a liquid yeast culture depending on temperature

Korea has four distinct seasons with significant temperature differences over the year. Accordingly, in order to examine viability of yeast present in assorted feeds being supplied to farms (sites) depending on seasonal changes in storage temperature (high temperature in summer and low temperature in winter), an experiment was performed as follows.

A viability verifying test of yeast depending on temperature conditions (high temperature - 50°C, low temperature - 0°C) of the assorted feed prepared in Example 3 was performed, and the results are shown in Table 4 below.

**[Table 4] Viability of yeast present in assorted feeds depending on storage temperature**

| Number of yeasts (cfu/g) | 0h | 24h | 96h | 192h | 360h |
|---|---|---|---|---|---|
| Low temperature (0°C) | 1.0 × 10⁶ | 2.2 × 10⁵ | 1.6 × 10⁵ | 1.6 × 10⁵ | 1.0 × 10⁵ |
| High temperature (50°C) | | 1.0 × 10⁴ | 2.8 × 10² | killed | |

As shown in Table 4 above, due to low heat resistance, yeast has high viability at low temperature conditions but, at high temperature conditions, they are killed after a certain period of time, and thus it can be found that in summer they should be stored in the shade while avoiding being exposed to direct sunlight.

### Example 6: Experiment of artificial rumen on an assorted livestock feed using a liquid yeast culture

An artificial rumen experiment was performed using the assorted feed prepared in Example 3 as follows.

50% of the bulky feeds (rice straws) being generally fed to livestock animals in farms (sites) and 50% of the assorted feed prepared in Example 3 were combined to prepare it as a representative sample.

Samples containing about 0.5 g per each were added into a 125 mL serum bottle, and the bottle was stored in a 39°C incubator. The first five of the chemical components shown in Table 5 below were mixed with 500 mL of distilled water already in a round bottom flask, stirred until the mixture became completely dissolved, and its volume was adjusted to prepare artificial saliva, and stored thereafter. Immediately prior to use, the artificial saliva was added with CaCl₂ and maintained its temperature at 39°C until pH of the solution became 8.0. The thus prepared artificial saliva was sterilized at 121°C for 20 minutes and stored in a 39°C incubator (McDougall, 1948).

**[Table 5] Components of artificial saliva**

| Component | Content (g) |
|---|---|
| NaHCO₃ | 9.80 |
| Na₂HPO₄ · 7H₂O | 7.00 |
| KCl | 0.57 |
| NaCl | 0.47 |
| MgSO₄ · 7H₂O | 0.12 |
| CaCl₂ | 0.04 |

In order to collect rumen fluid, a heat-insulated bottle already provided with carbon dioxide was prepared, and the gastric fluid of a Holstein beef cattle, in which a fistula was installed therein, was collected using an 8-layered cheese cloths and stored in the 39°C heat-insulated bottle while dispensing carbon dioxide, thereby converting it into an anaerobic state. The gastric fluid collected above on the gauze was filtered again with 8-layered cheese cloths before use.

The anaerobic aliquoting device was heated to 330°C, and copper is reduced using hydrogen. The above prepared artificial saliva and rumen fluid were mixed in a 4:1 ratio, continuously dispensing carbon dioxide, and the serum container stored in the incubator was taken out and 50 mL each of the prepared inoculum was inoculated into each serum bottle, respectively.

Each of the prepared serum bottle was injected with carbon dioxide being released from the anaerobic dispensing device for 5 seconds, and the anaerobic state was maintained using prepared rubber caps and aluminum caps (20 mm seal). The resultant was cultured in a 39°C incubator.

Samples were collected from each serum bottle at preset time of 0, 3, 6, and 24 hours.

According to the above experimental method of the artificial rumen, the experiment was performed after dividing test groups into a group not added with the liquid yeast (control group) and a group added with the liquid yeast culture prepared in Example 3 (treated group).

The experimental results on artificial rumen are shown in FIGS. 2, 3, and 4. The results exhibited the pH increase in rumen when yeasts was added into the assorted feed, the increase of organic matter digestibility in rumen depending on cellulose digestibility, and the increase of the amount of volatile fatty acid (VFA) in rumen.

### Example 7: Experiment on supply of assorted livestock feed prepared using a liquid yeast culture on Lactation cow

The assorted feed prepared in Example 3 was supplied in on-site dairy farms and the change in the milk yield of the supplied group was observed.

The farm where the experiment was conducted is located in Paju city, Gyeonggi-do, Korea, using 27 heads of Holstein dairy cows (average body weight of 630kg) for a period of 31 days. The result of the feed experiment, where the cows used to be fed with the conventional assorted feed not added with liquid yeast were substituted to be fed with the assorted feed added with a liquid yeast additive in a 1:1 ratio during the experimental period of 31 days is shown in Table 6 below.

From the result, it can be found that the yeast addition into the assorted feed increased the amount of productivity (milk yield) due to the increase in the growth of cellulolytic bacteria, and that the milk production increased by 1.6 kg by comparison between before/after the feed experiment.

**[Table 6] Change in the milk yield before/after supply of assorted livestock feed using a liquid yeast culture**

| Category | Before Supply (1 day) | After Supply (31 days) |
|---|---|---|
| Milk yield (kg/head/day) | 26.9 | 28.5 |

## Claims

1. A method for preparing assorted livestock feed, the method comprising:
(a) preparing a liquid yeast culture by inoculating yeast cells into liquid medium and culturing them;
(b) selecting raw materials for assorted feed and mixing;
(c) forming the mixed raw materials into pellets via a pellet forming device;
(d) cooling the formed pellets;
(e) spraying the liquid yeast culture obtained in step (a) to the external surface of the cooled pellets; and
(f) cooling the pellets on which the liquid yeast culture has been sprayed.

2. The method of claim 1, wherein the liquid medium comprises 3-13 wt% of molasses, 1-5 wt% of glucose and 0.1-0.2 wt% of NaCl.

3. The method of claim 1 or claim 2, wherein the yeast is added in an amount of 1-5 wt% to the total medium.

4. The method of any one of claims 1 to 3, wherein the liquid yeast culture contains 5 x 10⁷ cfu/g - 1 x 10⁹ cfu/g of yeast.

5. The method of any one of claims 1 to 4, wherein the culture is performed at 37°C for 3 days.

6. The method of any one of claims 1 to 5, wherein the formed pellets are cooled to the room temperature to remove water in step (d).

7. The method of any one of claims 1 to 6, wherein the liquid yeast culture prepared in step (a) is sprayed by a liquid spray device in step (e).

8. The method of any one of claims 1 to 7, wherein the liquid yeast culture prepared in step (a) is added in the range of 0.05 - 0.5% relative to the total assorted feed in step (e).

9. The method of any one of claims 1 to 8, wherein in step (f), the pellets, on which the liquid yeast culture is sprayed, is cooled to the room temperature by using air of 18 - 25°C.

## Patentansprüche

1. Verfahren zum Herstellen von gemischtem Tierfutter, wobei das Verfahren die folgenden Schritte umfasst:
(a) Herstellen einer flüssigen Hefekultur, indem Hefezellen in einem flüssigen Medium geimpft und kultiviert werden;
(b) Auswählen von Rohmaterialien für gemischtes Futter und zum Mischen;
(c) Bilden der gemischten Rohmaterialien in Pellets durch eine Pelletformvorrichtung;
(d) Kühlen der gebildeten Pellets;
(e) Sprühen der flüssigen Hefekultur, die in Schritt (a) erhalten worden ist, auf die äußere Oberfläche der gekühlten Pelltets; und
(f) Kühlen der Pellets, auf die die flüssige Hefekultur gesprüht worden ist.

2. Verfahren nach Anspruch 1, wobei das flüssige Medium 3-13 Gew.% Molasse, 1-5 Gew.% Glucose und 0,1-0,2 Gew.% NaCl umfasst.

3. Verfahren nach Anspruch 1 oder 2, wobei die Hefe in einer Menge von 1-5 Gew.% zu dem gesamten Medium hinzugegeben wird.

4. Verfahren nach einem der Ansprüche 1 bis 3, wobei die flüssige Hefekultur 5 x 10⁷ KBE/g - 1 X 10⁹ KBE/g an Hefe enthält.

5. Verfahren nach einem der Ansprüche 1 bis 4, wobei die Kultur für eine Dauer von 3 Tagen bei 37 °C durchgeführt wird.

6. Verfahren nach einem der Ansprüche 1 bis 5, wobei die gebildeten Pellets auf Raumtemperatur abgekühlt werden, um in dem Schritt (d) Wasser zu entfernen.

7. Verfahren nach einem der Ansprüche 1 bis 6, wobei die flüssige Hefekultur, die in dem Schritt (a) hergestellt worden ist, in dem Schritt (e) durch eine Flüssigsprayvorrichtung gesprüht wird.

8. Verfahren nach einem der Ansprüche 1 bis 7, wobei die flüssige Hefekultur, die in dem Schritt (a) hergestellt worden ist, in dem Bereich von 0,05 - 0,5 % relativ zu dem gesamten gemischten Futter in dem Schritt (e) hinzugegeben wird.

9. Verfahren nach einem der Ansprüche 1 bis 8, wobei in dem Schritt (f) die Pellets, auf die die flüssige Hefekultur gesprüht worden ist, auf Raumtemperatur abgekühlt wird, indem Luft von 18 - 25 °C verwendet wird.

## Revendications

1. Procédé pour préparer des produits alimentaires variés pour le bétail, le procédé comprenant :
(a) la préparation d'une culture de levure liquide en inoculant des cellules de levure dans un milieu liquide et en les cultivant ;
(b) la sélection de matières premières pour les produits alimentaires variés et le mélange ;
(c) la formation des matières premières mélangées en granulés via un dispositif de formation de granulés ;
(d) le refroidissement des granulés formés ;
(e) la pulvérisation de la culture de levure liquide obtenue dans l'étape (a) sur la surface externe des granulés refroidis ; et
(f) le refroidissement des granulés sur lesquels la culture de levure liquide a été pulvérisée.

2. Procédé selon la revendication 1, dans lequel le milieu liquide comprend de 3 à 13 % en poids de mélasse, 1 à 5 % en poids de glucose et 0,1 à 0,2 % en poids de NaCl.

3. Procédé selon la revendication 1 ou la revendication 2, dans lequel la levure est ajoutée en une quantité de 1 à 5 % en poids au milieu total.

4. Procédé selon l'une quelconque des revendications 1 à 3, dans lequel la culture de levure liquide contient de 5 x 10⁷ cfu/g à 1 x 10⁹ cfu/g de levure.

5. Procédé selon l'une quelconque des revendications 1 à 4, dans lequel la culture est effectuée à 37 °C pendant 3 jours.

6. Procédé selon l'une quelconque des revendications 1 à 5, dans lequel les granulés formés sont refroidis jusqu'à la température ambiante pour enlever l'eau dans l'étape (d).

7. Procédé selon l'une quelconque des revendications 1 à 6, dans lequel la culture de levure liquide préparée dans l'étape (a) est pulvérisée par un dispositif de pulvérisation de liquide dans l'étape (e).

8. Procédé selon l'une quelconque des revendications 1 à 7, dans lequel la culture de levure liquide préparée dans l'étape (a) est ajoutée dans la plage de 0,05 à 0,5 % par rapport aux produits alimentaires variés totaux dans l'étape (e).

9. Procédé selon l'une quelconque des revendications 1 à 8, dans lequel dans l'étape (f), les granulés, sur lesquels la culture de levure liquide est pulvérisée, sont refroidis jusqu'à la température ambiante en utilisant de l'air à 18 à 25 °C.
